# EUROPÄISCHE PATENTSCHRIFT

(11) **EP 2 770 753 B1**
(45) Veröffentlichungstag und Bekanntmachung des Hinweises auf die Patenterteilung: **05.06.2019**
(21) Anmeldenummer: 14153837.1
(22) Anmeldetag: 04.02.2014
(51) Int. Cl.: H04R 25/00, H01Q 21/24, H02J 50/12, H02J 50/70, H02J 50/80

(54) **Kabelloses Ladesystem für Hörinstrumente**
Wireless charging system for hearing instruments
Système de charge sans fil pour instruments auditifs

(30) Priorität: 22.02.2013 DE 102013202930
(43) Veröffentlichungstag der Anmeldung: 27.08.2014
(73) Patentinhaber: Sivantos Pte. Ltd., Singapore 539775 (SG)
(72) Erfinder: Martius, Sebastian, Dr., 91301 Forchheim (DE); Sewiolo, Benjamin, Dr., 90587 Obermichelbach OT Rothenburg (DE)
(74) Vertreter: FDST Patentanwälte

(56) Entgegenhaltungen:
- WO-A1-2009/100981
- DE-U1- 29 718 104
- US-A1- 2005 156 560
- US-B1- 6 380 896
- US-B1- 6 658 124

## Beschreibung

Die Erfindung betrifft ein Ladesystem gemäß dem Oberbegriff des Anspruchs 1 zum kabellosen resonanten Aufladen von wiederaufladbaren Hörinstrumenten.

Hörinstrumente können beispielsweise als Hörgeräte ausgeführt sein. Ein Hörgerät dient der Versorgung einer hörgeschädigten Person mit akustischen Umgebungssignalen, die zur Kompensation bzw. Therapie der jeweiligen Hörschädigung verarbeitet und verstärkt sind. Es besteht prinzipiell aus einem oder mehreren Eingangswandlern, aus einer Signalverarbeitungseinrichtung, einer Verstärkungseinrichtung, und aus einem Ausgangswandler. Der Eingangswandler ist in der Regel ein Schallempfänger, z.B. ein Mikrofon, und/oder ein elektromagnetischer Empfänger, z.B. eine Induktionsspule. Der Ausgangswandler ist in der Regel als elektroakustischer Wandler, z. B. Miniaturlautsprecher, oder als elektromechanischer Wandler, z. B. Knochenleitungshörer, realisiert. Er wird auch als Hörer oder Receiver bezeichnet. Der Ausgangswandler erzeugt Ausgangssignale, die zum Gehör des Patienten geleitet werden und beim Patienten eine Hörwahrnehmung erzeugen sollen. Der Verstärker ist in der Regel in die Signalverarbeitungseinrichtung integriert. Die Stromversorgung des Hörgeräts erfolgt durch eine ins Hörgerätegehäuse integrierte Batterie. Die wesentlichen Komponenten eines Hörgeräts sind in der Regel auf einer gedruckten Leiterplatine als Schaltungsträger angeordnet bzw. damit verbunden.

Hörinstrumente können außer als Hörgeräte auch als sogenannte Tinnitus-Masker ausgeführt sein. Tinnitus-Masker werden zur Therapie von Tinnitus-Patienten eingesetzt. Sie erzeugen von der jeweiligen Hörbeeinträchtigung und je nach Wirkprinzip auch von Umgebungsgeräuschen abhängige akustische Ausgangssignale, die zur Verringerung der Wahrnehmung störender Tinnitus- oder sonstiger Ohrgeräusche beitragen können. Hörinstrumente können weiter auch als Telefone, Handys, Headsets, Kopfhörer, MP3-Player oder sonstige Telekommunikations- oder Unterhaltungselektronik-Systeme ausgeführt sein.

Im Folgenden sollen unter dem Begriff Hörinstrument sowohl Hörgeräte, als auch Tinnitus-Masker, vergleichbare derartige Geräte, sowie Telekommunikations- und Unterhaltungselektronik-Systeme verstanden werden.

Hörinstrumente werden üblicherweise mit Batterien betrieben. Die Betriebsdauer ist dabei je nach Energieinhalt der Batterien und Anforderung des Hörinstruments zeitlich begrenzt. Angesichts der allgemeinen Tendenz zur Miniaturisierung werden Batterien mit geringer Baugröße bevorzugt, was deren Energieinhalt zusätzlich limitiert.

Um häufiges Ersetzen verbrauchter Batterien zu vermeiden, können Hörinstrumente mit wiederaufladbaren Batterien (Akkumulatoren, kurz Akkus) betrieben werden. Weit verbreitet sind beispielsweise NiMH-Akkus, eine jüngere, sich stark verbreitende Batterietechnologie sind Li-Ionen-Akkus.

Akkus von Hörinstrumenten werden üblicherweise galvanisch über Metallkontakte am Gerät geladen. Aus regulatorischen Gründen dürfen Medizinprodukte in einer zunehmenden Anzahl von Ländern keine offenen spannungsführenden Stellen aufweisen. Zudem führen Feuchtigkeit, Schweiß und andere elektrolythaltige Flüssigkeiten und Verunreingungen zu Korrosion an den Metallkontakten. Li-Ionen-Akkus weisen höhere Betriebsspannungen als NiMH-Akkus auf, was die Problematik sowohl des regulatorischen Aspekts als auch der Korrosion weiter verschärft.

Um galvanische Metallkontakte zu vermeiden, können drahtlos Ladesysteme eingesetzt werden. Der Artikel **"**Wireless Power Minimizes Interconnection Problems", Sam Davis, Power Electronics Technology, July 2011, S.10ff erläutert die physikalischen und elektrodynamischen Grundlagen drahtloser Ladesysteme auf der Basis magnetischer Induktion. Für die hohe Effizienz der Kopplung sind demnach ein geringer Abstand und eine möglichst exakte Ausrichtung zwischen Sende- und Empfangsantenne maßgeblich. Weiter ist eine hohe Qualität der Antennen hinsichtlich ihrer magnetischen Kenngrößen sowie eine möglichst gute magnetische Abschirmung des Gesamtsystems nach außen wichtig. Nicht zuletzt ist das Frequenzverhalten des Gesamtsystems von Bedeutung, wobei die Effizienz grundsätzlich mit der Wechselfrequenz des Induktionsfeldes zunimmt, zumindest bis in einen Bereich von mindestens 100kHz.

Aus der Druckschrift US 2011/0254503 A1 ist ein System zum drahtlosen Laden eines Kraftfahrzeugs mittels magnetischer Induktion bekannt. Das Fahrzeug ist mit einer Empfangsantenne ausgestattet. Eine Sendeantenne ist im Boden eingelassen, beispielsweise im Bereich eines Autoparkplatzes. Sende- und Empfangsantenne stehen sich im Wesentlichen planar gegenüber. Ein Positionierungssystem, das mit einem zikular polarisierten Magnetfeld und einem Zeit-Referenz-Signal arbeitet, hilft, eine möglichst exakte Ausrichtung und einen möglichst kleinen Abstand der Antennen zueinander zu gewährleisten.

Aus der US 2005/0156560 A1 ist es bekannt, eine Anzahl von Ladegeräten in einem Gehäuse anzuordnen, um Sekundärbatterien portabler elektronischer Geräte kabellos induktiv zu laden, wobei die Sekundärbatterien zusammen mit einer Spule eines Leistungsreceivers oder das elektronische Gerät selbst mit einem zusätzlichen hochfrequenten IC-chip und einer Antenne versehen in dem Gehäuse aufgenommen werden können.

Aus der Druckschrift US 2009/0285426 A1 ist ein System zum drahtlosen Laden eines Hörinstruments bekannt. Hörinstrument und Ladegerät sind mit je einer Spule ausgestattet. Zur Energie- und Daten-Übertragung werden die Spulen induktiv gekoppelt. Um eine gute Kopplung zu erreichen, muss das Hörinstrument im Ladegerät exakt an der dafür vorgesehenen Stelle positioniert werden.

Um eine flexiblere Positionierung bei trotzdem guter Kopplung zu erreichen, sind für Mobiltelefone sogenannte "Ladematten" bekannt (siehe oben angeführten Artikel Power Electronics Technology, July 2011, S.10ff**).** Diese weisen ein Array planarer Spulen auf, die einzeln an- oder abgeschaltet werden können. Dadurch kann an jeder Position auf der Ladematte eine Kopplung ermöglicht werden. Geeignete Mobiltelefone weisen ebenfalls planare Spulen auf. Die Spulen nehmen bei abgelegtem Mobiltelefon aufgrund der flachen Form des Mobiltelefons eine vorbestimmte Orientierung zur Ablagefläche ein. Dadurch sind solche Mobiltelefone auf der Ladematte frei positionierbar und es kann an jeder Position eine Kopplung zur Ladematte hergestellt werden.

Im Gegensatz zu Mobiltelefonen sind Hörgeräte nicht flach sondern unregelmäßig gerundet geformt. Sie können je nach Hörverlust einen kleinen oder größeren Hörer aufweisen. Unter Umständen sind sie als ITE-Geräte individuell unterschiedlich geformt. Daher nimmt eine Empfangsantenne in einem abgelegten Hörinstrument nicht unbedingt eine vorbestimmte Orientierung zur Ablagefläche ein. Deshalb ist eine exakte Ausrichtung von Sende- und Empfangs-Spule für ein Hörgerät auf einer Ladematte nicht sicher zu gewährleisten, sodass möglicherweise nicht genügend Leistung zum Erreichen der Ladespannung übertragen werden kann.

Der Erfindung liegt die Aufgabe zugrunde, ein Ladesystem zum drahtlosen Laden eines Hörinstruments zu schaffen, wobei ein Hörinstrument zum Laden frei in einem Ladegerät positionierbar sein soll.

Die Erfindung löst diese Aufgabe durch ein Ladesystem mit den Merkmalen des Patentanspruchs 1. Vorteilhafte Ausgestaltungen und Weiterbildungen sind Gegenstand der Unteransprüche.

Das Ladesystem umfasst ein zum kabellosen Laden eines Hörinstrument vorgesehenes Ladegerät mit einer Sende-Antennenanordnung, einem Sendeverstärker zum Ansteuern der Sende-Antennenanordnung und einem innerhalb des Ladegerätes angeordneten Laderaum. Die Sende-Antennenanordnung weist mindestens zwei Speisepunkte auf und die Sende-Antennenordnung und die Speisepunkte sind in Relation zum Laderaum räumlich derart angeordnet, dass damit ein zirkular polarisiertes elektromagnetisches Feld im Laderaum erzeugt werden kann. Der Sendeverstärker ist dazu ausgebildet, die Antennen entsprechend zur Erzeugung eines zirkular polarisierten elektromagnetischen Feldes im Laderaum anzusteuern.

Die Sende-Antennenanordnung erzeugt dabei ein zirkular polarisiertes HF-Feld. Grundsätzlich braucht die Sende-Antennenanordnung dazu lediglich eine Antenne aufzuweisen. Beispielsweise könnte sie als Birdcage-Antenne ausgeführt sein. Sind mehrere Antennen vorgesehen, können diese in verschiedensten Anordnungen ausgeführt sein, z.B. als Remote Body Array. Das Speisenetzwerk zur Versorgung der Speisepunkte braucht lediglich so ausgeführt zu sein, dass Leistung und Phase an den Speisepunkten variiert werden können. Das Speisenetzwerk teilt das Sendesignal dazu in mindestens zwei Pfade mit einstellbarer Phasendifferenz Df und Amplituden A1 und A2 auf. Für ein kreisrundes zirkular polarisiertes Feld müsste beispielsweise A1=A2 und Df=90° gewählt werden. Durch das zirkular polarisierte Feld ist eine gute resonante Kopplung auch mit einem verkippten Hörinstrument möglich, das heißt bei nicht vorbestimmter und nicht vorhersehbarer Orientierung und Position der Empfangsspule des Hörinstruments.

Das HF-Feld im Laderaum kann homogen sein, es kann stattdessen jedoch auch inhomogen sein. Beispielsweise kann es auf eine Vorzugsposition des Hörinstrumentes im Laderaum fokussiert werden, und zwar durch Zu- und Abschalten von Spulenelementen innerhalb der Senderanordnung, Veränderung des Verhältnisses der jeweiligen Sendeleistungen oder Änderung der Phase einzelner Spulen zueinander. Hierzu können unterschiedliche anstatt gleiche Amplituden eingestellt werden. Außerdem können andere Phasen als 90° eingestellt werden, um z.B. ein elliptisches Volumen anzuregen.

Damit wird im Ladegerät ein dreidimensionales Volumen statt wie bei einer Ladematte eine zweidimensionale Fläche angeregt. Aufgrund der möglichen Verkippung des Hörinstrumentes ist der Laderaum nicht mit einer planaren Ablagefläche, sondern in Form einer dreidimensionalen Ladeschale gestaltet.

Eine vorteilhafte Weiterbildung des Grundgedankens besteht darin, dass die Wandung des Laderaums eine elektromagnetische Abschirmung umfasst. Dadurch wird die resonante Kopplung zwischen Sende-Antennenanordnung und einer im Laderaum befindlichen Empfangs-Antennenanordnung verstärkt.

Eine weitere vorteilhafte Weiterbildung des Grundgedankens besteht darin, dass die Sende-Antennenanordnung mehrere Antennen umfasst. Dadurch ist ein guter Kompromiss zwischen bauartlichem Aufwand des Ladegeräts und erzielbarer Effizienz des zirkular polarisierten Magnetfeldes erzielt.

Eine weitere vorteilhafte Weiterbildung des Grundgedankens besteht darin, dass die Antennen als Spulen ausgeführt sind. Spulenförmige Antennen erlauben eine gute Kontrolle und effiziente Erzeugung eines zirkular polarisierten Magnetfeldes.

Das kabellos ladbaren Hörinstrument des Ladesystems weist eine wiederaufladbare Batterie, eine Empfangs-Antennenanordnung, die zum resonanten Empfangen von Leistung ausgebildet ist, eine Ladeeinrichtung, die zum Transformieren des von der Empfangs-Antennenanordnung empfangenen Signals in ein Ladesignal, zum Laden der Batterie durch Zuführen des Ladesignals, und zum Steuern des Ladevorgangs ausgebildet ist, und eine Sendeeinrichtung auf, die zum Senden eines vom resonanten Empfangen von Leistung abhängigen Ladeparameterwertes an das Ladegerät ausgebildet ist. Die Ladeeinrichtung umfasst weiter eine Erfassungseinrichtung, die zum Erfassen des Ladeparameterwertes ausgebildet ist.

Um im Empfänger des Hörinstruments die Komplexität möglichst gering zu halten, erfolgt die Anpassung an die individuelle Resonanzfrequenz (Tuning) im Ladegerät. Das Tuning kann digital, beispielsweise mit einer DDS (Direct Digital Synthesis), oder analog, beispielsweise mit Hilfe von Varaktoren, erfolgen. Mit Hilfe einer drahtlosen Kommunikationsschnittstelle zwischen Hörinstrument und Ladegerät kann der für das Tuning relevante Ladeparameterwert übertragen werden, beispielsweise die induzierte Ladespannung oder der induzierte Ladestrom. Das Ladegerät kann die Sendefrequenz dann so lange variieren, bis ein Maximum des Ladeparameterwertes erreicht ist. Insbesondere wird die Sendefrequenz variiert.

Daher ermöglicht die Erfassung eines entsprechenden Ladeparameterwertes im Hörinstrument und Übertragung an das Ladegerät ein Tuning auf die Resonanzfrequenz durch das Ladegerät.

Eine vorteilhafte Weiterbildung des Grundgedankens besteht darin, dass als Ladeparameter die aufgrund des resonanten Empfangens von Leistung erzeugte Ladespannung und/oder der Ladestrom verwendet werden. Ladespannung und Ladestrom sind einfach zu erfassende Größen, die zudem einen direkten Rückschluss auf die Ladeleistung erlauben.

Mit Hilfe der drahtlosen Kommunikationsschnittstelle zwischen Hörinstrument und Ladegerät können zudem weitere für den Ladevorgang relevante Daten übertragen werden, beispielsweise der Ladezustand des Akkus, die Art des Akku-Systems (beispielsweise NiMH oder Li-Ionen) oder die Kapazität des Akkus.

Das Ladegerät des Ladesystems weist eine Regelungseinrichtung auf, diezum Empfangen des Ladeparameterwertes von der Sendeeinrichtung des Hörinstruments ausgebildet ist, und der Sendeverstärker steuert die Sende-Antennenanordnung in Abhängigkeit von dem Ladeparameterwert an.

Damit ist eine Grundvoraussetzung geschaffen, dass Ladegerät in Anpassung an die individuellen Gegebenheiten (Hörinstrumenttyp, Bauteiltoleranzen, Lage und Orientierung des Hörinstruments im Laderaum, etc ...) aufgrund des Ladeparameterwertes als Eingangsgröße zu regeln, um die resonante Kopplung bzw. Effizienz der Leistungsübertragung optimieren zu können.

Eine vorteilhafte Weiterbildung des Grundgedankens besteht darin, dass Sendeverstärker die Sende-Antennenanordnung mit einer in Abhängigkeit von dem Ladeparameterwert geregelten Frequenz ansteuern.

Entscheidend ist, dass das Ladesystem, im Gegensatz zu den bekannten Anordnungen (gekoppelte Einzelspulen, Ladematte), resonant ausgeführt ist. Die individuelle Resonanzfrequenz des Ladesystems hängt vom jeweiligen Hörinstrument ab und wird unter anderem beeinflusst durch Abweichungen der Resonanzfrequenz des Empfängers im Hörinstrument, durch Fertigungs- und Bauteiltoleranzen. Die Resonanzfrequenz hängt weiter von der Position und Orientierung des Hörinstruments im Ladegerät ab. Hält das Magnetfeld die Resonanzfrequenz ein, ergibt sich eine besonders effiziente Leistungsübertragung von Sende-Antennenanordnung zu Empfangs-Antennenanordnung. Infolge dessen stellt sich bei Resonanzfrequenz eine besonders hohe Ladeleistung ein. Umgekehrt erlaubt dementsprechend die Kenntnis eines entsprechenden Ladeparameterwertes einen Rückschluss darauf, ob die Resonanzfrequenz eingehalten ist. Daher regelt der Sender im Ladegerät aufgrund des Ladeparameterwertes als Eingangsgröße die Sendefrequenz in Anpassung an die individuelle Resonanzfrequenz, um eine resonante Kopplung zwischen Ladegerät und Hörinstrument herstellen zu können.

Um im Empfänger des Hörinstruments die Komplexität möglichst gering zu halten, erfolgt die Anpassung an die individuelle Resonanzfrequenz (Tuning) im Sender. Das Tuning kann digital, beispielsweise mit einer DDS (Direct Digital Synthesis), oder analog, beispielsweise mit Hilfe von Varaktoren, erfolgen. Mit Hilfe einer drahtlosen Kommunikationsschnittstelle vom Empfänger des Hörinstruments zum Sender können für das Tuning relevante Daten übertragen werden, beispielsweise die induzierte Ladespannung oder der induzierte Ladestrom. Die Sendefrequenz wird so lange variiert, bis ein Maximum von Lagespannung bzw. Ladestrom erreicht ist. Insbesondere wird die Sendefrequenz verändert, falls Ladestrom oder Ladespannung zu gering ist.

Eine weitere vorteilhafte Weiterbildung des Grundgedankens besteht darin, dass der Sendeverstärker die Antennen individuell mit einer in Abhängigkeit von dem Ladeparameterwert geregelten Sende-Leistung und/oder Phase ansteuert.

Durch Veränderung des Verhältnisses der jeweiligen Sendeleistungen oder Änderung der Phase einzelner Spulen zueinander, und weiter auch durch Zu- und Abschalten von Spulenelementen innerhalb der Senderanordnung, kann das zirkular polarisierte HF-Feld der Antenne moduliert werden. Es kann beispielsweise ein homogenes Feld erzeugt werden. Es kann auch ein auf eine Vorzugsposition des Hörinstrumentes im Ladegerät fokussiertes Feld erzeugt werden,

Die Fokussierung des Feldes kann, ebenso wie die Sendefrequenz, durch Variieren des Fokus des von den Sendespulen erzeugten Feldes optimiert werden. Dazu variiert das Ladegerät durch Zu- und Abschalten von Spulenelementen innerhalb der Senderanordnung, durch Veränderung des Verhältnisses der jeweiligen Sendeleistungen oder durch Änderung der Phase der einzelnen Spulen den Fokus so lange, bis eine anhand des Lageparameterwertes ermittelte Optimierung der resonanten Kopplung zwischen Ladegerät und Hörinstrument erreicht ist.

Vorteilhafterweise können auch gleichzeitig zwei oder mehr Hörinstrumente mit einem wie vorangehend erläutert ausgeführten Ladegerät bzw. Ladesystem geladen werden. Dabei braucht lediglich darauf geachtet zu werden, dass der Wechselstrom in den Empfangsspulen gering gehalten wird, denn die Spulen koppeln untereinander hauptsächlich über das durch den Ladewechselstrom erzeugte B-Feld. Die Stromstärke kann dazu in der Empfangsspule durch einen Abgleich der Empfangsspule eingestellt werden.

Weitere vorteilhafte Ausgestaltungen und Vorteile ergeben sich aus der nachfolgenden Beschreibung von Ausführungsbeispielen anhand von Figuren. Die Figuren zeigen:
- Fig. 1: ein Ladegerät in perspektivischer Ansicht,
- Fig. 2: ein Ladegerät in Draufsicht,
- Fig. 3: eine Ladegerät-Elektronik,
- Fig. 4: ein Hörinstrument,
- Fig. 5: ein Ladegerät in Draufsicht und
- Fig. 6: eine Sende-Antennenanordnung

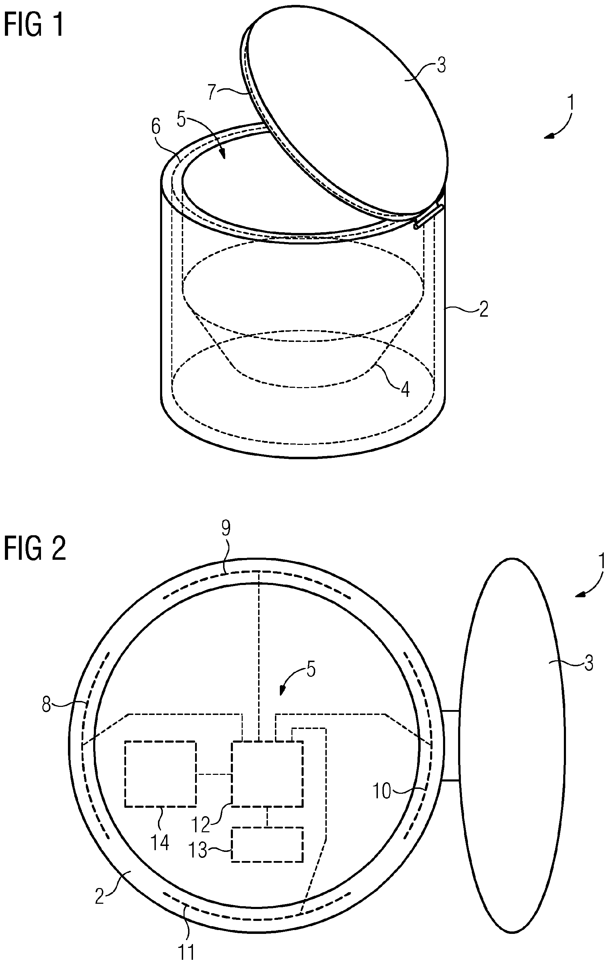

In **Figur 1** ist ein Ladegerät 1 perspektivisch dargestellt. Es umfasst ein Gehäuse 2 sowie einen Deckel 3. Innerhalb des Gehäuses 2 ist ein Laderaum 5 angeordnet, in dem ein in der Abbildung nicht dargestelltes Hörinstrument geladen werden kann. Der Laderaum 5 ist nicht mit einem ebenen Boden ausgestaltet, sondern der Boden ist als Ladeschale 4 gestaltet. Ein zu ladendes Hörinstrument, das in den Laderaum 5 eingelegt wird, wird in der Regel am tiefsten Punkt der Ladeschale 4 zum Liegen kommen.

Das Ladegerät 1 ist zum kabellosen Laden eines eingelegten Hörinstruments ausgestaltet. Zur kabellosen Leistungsübertragung wird magnetische Resonanz verwendet, indem im Laderaum 5 ein magnetisches Wechselfeld erzeugt wird. Um die resonante Kopplung zwischen einem im Laderaum 5 eingelegten Hörinstrument und dem magnetischen Wechselfeld bzw. der Sende-Antennenordnung (in der Abbildung nicht dargestellt) zu verbessern, ist das Ladegerät 1 elektromagnetisch geschirmt. Dies wird durch eine elektromagnetische Abschirmung 7, die in dem Deckel 3 integriert ist, sowie durch eine elektromagnetische Abschirmung 6, die in die Gehäusewand des Gehäuses 2 integriert ist, bewirkt. Die elektromagnetischen Abschirmungen 6, 7 sind so ausgestaltet, dass der Laderaum 5 bei geschlossenem Deckel 3 rundum vollständig geschirmt ist. Die Schirmelemente können beispielsweise aus Metall bestehen.

In **Figur 2** ist das Ladegerät 1 in Draufsicht dargestellt. Der Deckel 3 ist geöffnet und gibt den Blick in den Laderaum 5 frei. Unterhalb des Laderaums 5 befindet sich die in der Abbildung lediglich schematisch angedeutete, strichliert dargestellte Ladeelektronik des Ladegeräts 1. In der Wand des Gehäuses 2 befinden sich die ebenfalls lediglich schematisch dargestellten, strichliert angedeuteten Antennen 8, 9, 10, 11 der Sende-Antennenanordung. Jede der Antennen 8, 9, 10, 11 weist mindestens einen Speisepunkt auf, so dass die daraus gebildete Antennen-Anordnung mehrere Speisepunkte umfasst.

Die Antennen 8, 9, 10, 11 sind so angeordnet, dass sie ein jeweils etwa senkrecht zur Wand des Gehäuses 2 orientiertes Magnetfeld erzeugen können. Somit ermöglichen sie die Erzeugung von Magnetfeldern in allen vier orthogonalen Raumrichtungen der Ebene des Ladegeräts 1 (Zeichnungsebene). Diese Anordnung ermöglicht es, bei Ansteuerung der jeweiligen Speisepunkte mit gleicher Frequenz und unterschiedlicher Phase ein zirkular polarisiertes Magnetfeld im Laderaum 5 zu erzeugen.

Die in der Abbildung nicht dargestellte elektromagnetische Schirmung des Gehäuses 2 bzw. des Deckels 3 hilft dabei, Inhomogenitäten des Magnetfelds im Laderaum 5, die durch äußere Einflüsse verursacht werden könnten, zu unterdrücken. Weiter erhöht die elektromagnetische Schirmung die Felddichte im Laderaum 5 und ermöglicht so eine effizientere Übertragung von Ladeleistung.

Werden die Speisepunkte der Antennen 8, 9, 10, 11 mit jeweils unterschiedlicher Leistung angesteuert, kann im Inneren des Ladegeräts 5 ein inhomogenes Magnetfeld erzeugt werden. Inhomogenitäten können weiter auch durch Ansteuerung mit jeweils unterschiedlicher Phase erreicht werden, sowie auch durch unterschiedliche Modulation des jeweiligen Ansteuersignals. Zudem können die Antennen 8, 9, 10, 11 jeweils aus mehreren Antennenelementen aufgebaut sein. Vorzugsweise sind sie als Spulen ausgeführt, die zudem jeweils mehrere Spulenelemente umfassen können. Dies gestattet eine weitere Möglichkeit, Inhomogenitäten des Magnetfeldes zu modulieren, in dem einzelne Spulenelemente unterschiedlich angesteuert bzw. an- und abgeschaltet werden. Ein inhomogenes Magnetfeld im Laderaum 5 wird vorzugsweise auf den tiefsten, zentralen Punkt der Ladeschale 4 fokussiert.

Die Ladeelektronik des Ladegeräts 1 umfasst einen Sendeverstärker 12, eine Energieversorgung 14, sowie eine Regelungseinrichtung 13. Der Sendeverstärker 12 bezieht seine Betriebsenergie von der Energieversorgung 14 und steuert die Antennen 8, 9, 10, 11 aufgrund von Steuerbefehlen der Regelungseinrichtung 13 an. Die Energieversorgung 14 kann beispielsweise eine Batterie, eine wiederaufladbare Batterie oder ein Netzteil sein.

Die Regelungseinrichtung 13 ist dazu ausgebildet, den Sendeverstärker 12 so zu regeln, dass ein homogenes oder inhomogenes Magnetfeld erzeugt wird. Weiter kann sie eine Modulierung des inhomogenen Magnetfelds beeinflussen. Außerdem kann die Ladeelektronik Frequenz und Inhomogenität des Magnetfelds aufgrund einer noch zu erläuternden Eingangsgröße regeln, um beispielsweise die resonante Kopplung mit einem zu ladenden Gerät zu optimieren.

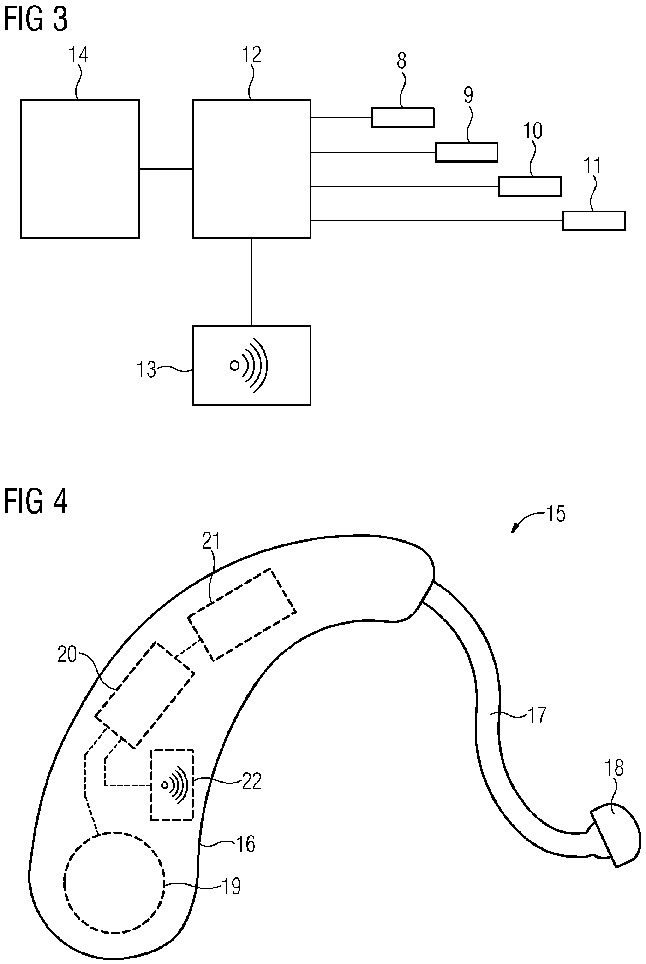

In **Figur 3** ist die Ladeelektronik des Ladegeräts 1 schematisch dargestellt. Eine Energieversorgung 14 versorgt die Ladeelektronik mit Energie. Die Regelungseinrichtung 13 gibt Steuerbefehle für den Sendeverstärker 12 vor. Der Senderverstärker 12 steuert die Speisepunkte der Antennen 8, 9, 10, 11 einzeln an. Falls die Antennen 8, 9, 10, 11 aus mehreren Antennenelementen, beispielsweise Spulenelementen bestehen, steuert der Sendeverstärker 12 auch die Speisepunkte der Antennenelemente jeweils einzeln an.

Regelungseinrichtung 13 und Sendeverstärker 12 können jeweils sowohl in analoger als auch digitaler Schaltungstechnik realisiert sein. In analoger Schaltungstechnik kann beispielsweise eine Frequenzregelung mit Hilfe von Varaktoren realisiert sein. Vorzugsweise wird jedoch digitale Schaltungstechnik eingesetzt. Die Steuerung des Ausgangssignals kann in digitaler Schaltungstechnik beispielsweise in DDS-Technologie DDS (Direct Digital Synthesis) realisiert sein.

Der Sendeverstärker 12 erhält als Eingangsgrößen Steuerbefehle von der Regelungseinrichtung 13. Die Regelungseinrichtung 13 dient unter anderem der Anpassung der Frequenz des Magnetfelds im Laderaum 5 an die jeweils individuelle Resonanzfrequenz. Die individuelle Resonanzfrequenz hängt vor allem vom Aufbau des eingelegten Hörinstruments sowie dessen Empfangs-Antennenordnung ab. Weiter sind die Lage und Orientierung des Hörinstruments bzw. dessen Empfangs-Antennenanordnung im Laderaum 5 maßgeblich.

Die mithin durch die eingelegte Vorrichtung und deren Lage bestimmte Resonanzfrequenz im Ladesystem, das durch das Ladegerät 1 und die eingelegte Vorrichtung gebildet wird, stellt diejenige Magnetfeldfrequenz dar, bei der eine optimale resonante Kopplung zwischen Ladegerät 1 und eingelegter Vorrichtung gegeben ist. Die Regelungseinrichtung 13 dient unter anderem der Regelung der Magnetfeldfrequenz, um die Resonanzfrequenz einzustellen und einzuhalten.

Als Regelungs-Eingangsgröße kann vorzugsweise ein Parameterwert des tatsächlich an das zu ladende Gerät übertragenen Signals herangezogen werden. Zu diesem Zweck ist die Regelungseinrichtung 13 derart ausgebildet, dass sie einen entsprechenden Parameterwert von einem in das Ladegerät 1 eingelegten Hörinstrument empfangen kann. Vorzugsweise wird der Parameterwert kabellos übertragen. Aufgrund eines solchen empfangenen Parameterwertes als Eingangsgröße kann die Regelungseinrichtung 13 die Magnetfeldfrequenz des Magnetfelds so lange variieren, bis anhand eines Maximums des empfangenen Parameterwertes eine Optimierung des Magnetfelds festgestellt wird. In gleicher Weise können beispielsweise auch Inhomogenitäten des Magnetfeldes optimiert werden.

In **Figur 4** ist ein BTE-Hörgerät (Behind-The-Ear) 15 schematisch dargestellt. Es umfasst ein BTE-Gehäuse 16 sowie ein Tube 17 samt Ohrstück 18. Das Hörinstrument 15 weist eine Batterie 19 zur Energieversorgung auf, die als wiederaufladbare Batterie ausgeführt ist. Es kann sich z.B. um einen Lithium-Ionen-Akku handeln. Die wiederaufladbare Batterie 19 ist mit einer Ladeeinrichtung 20 verbunden, die die Batterie 19 lädt und den Ladevorgang kontrolliert.

Die Ladeeinrichtung 20 wird von einer Empfangs-Antennenanordnung 21 mit Energie versorgt, sobald in die Empfangs-Antennenanordnung 21 Leistung durch ein äußeres Magnetfeld induziert wird. Sie umfasst eine Erfassungseinrichtung, die einen Ladeparameterwert erfasst. Der Ladeparameter kann beispielsweise eine Ladespannung sein, ein Ladestrom oder eine Ladeleistung. In diesem Fall umfasst die Erfassungseinrichtung einen Spannungsmesser und/oder einen Strommesser. Der Ladeparameterwert hängt maßgeblich vom Signal und der Leistung ab, die die Ladeeinrichtung 20 von der Empfangs-Antennenanordnung 21 erhält. Folglich hängt der Parameterwert maßgeblich von der Güte bzw. Effizienz der resonanten Kopplung der Empfangs-Antennenanordung 21 mit einem äußeren Magnetfeld bzw. einer äußeren Sende-Antennenanordnung ab.

Der erfasste Ladeparameterwert wird durch eine Sendeeinrichtung 22 vorzugsweise kabellos gesendet. Die Sendeeinrichtung 22 und die vorangehend erläuterte Regelungseinrichtung 13 sind so aufeinander abgestimmt, dass die Regelungseinrichtung 13 den von der Ladeeinrichtung 20 gesendeten Ladeparameter empfangen kann. Das Hörinstrument 15 übermittelt also mittels der Ladeeinrichtung 20 bzw. Sendeeinrichtung 22 den Ladeparameterwert, der als Eingangsgröße für die Regelung des äußeren Magnetfelds durch das vorangehend erläuterte Ladegerät 1 herangezogen werden kann. Auf diese Weise können Parameter des äußeren Magnetfelds aufgrund des Ladeparameterwertes als Eingangsgröße geregelt und jeweils so lange variiert werden, bis ein Maximum des Ladeparameterwerts erreicht ist.

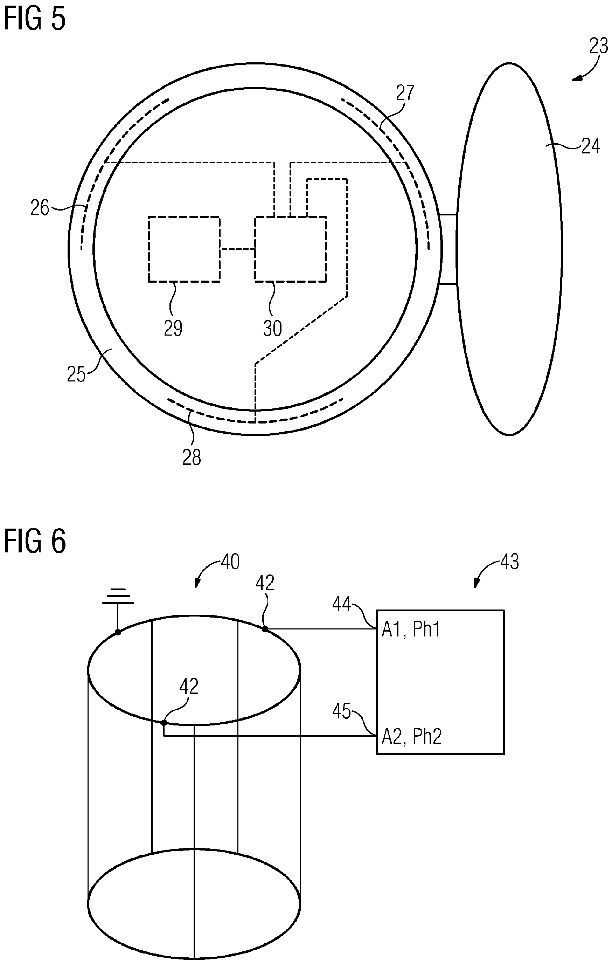

In **Figur 5** ist eine abgeänderte Variante eines Ladegeräts 23 in Draufsicht schematisch dargestellt. Das Ladegerät 23 umfasst einen Deckel 24 sowie ein Gehäuse 25. Das Ladegerät 23 weist ebenfalls eine elektromagnetische Abschirmung auf, die in der Abbildung jedoch nicht dargestellt ist.

Eine strichliert angedeutete Energieversorgung 29 versorgt einen ebenfalls strichliert angedeuteten Sendeverstärker 30 mit Energie. Der Sendeverstärker 30 steuert ebenfalls die Speisepunkte der jeweils strichliert angedeuteten Antennen 26, 27, 28 jeweils einzeln an. Die Antennen 26, 27, 28 können jeweils aus mehreren Antennenelementen aufgebaut sein, deren Speisepunkte der Sendeverstärker 30 jeweils einzeln ansteuern sowie an- und abschalten kann. Die Antennen 26, 27, 28 können beispielsweise als Spulen gestaltet sein, die jeweils aus mehreren Spulenelementen zusammengesetzt sein können.

Die Antennen 26, 27, 28 sind derart in der Wand des Gehäuses 25 angeordnet, dass sie jeweils ein darauf etwa senkrecht orientiertes Magnetfeld erzeugen können. Durch Ansteuerung mit zueinander unterschiedlicher Phase kann ein zirkular polarisiertes Magnetfeld in der Ebene des Laderaums des Ladegeräts 23 (als in der Zeichnungsebene) erzeugt werden. Die Ausführung des Ladegeräts 23 mit drei statt vier Antennen 26, 27, 28 erlaubt ebenfalls die Erzeugung eines zirkular polarisierenden Magnetfeldes, wobei die geringere Anzahl an Antennen jedoch nur eine geringere Magnetfeld-Homogenität ermöglicht.

In **Figur 6** ist eine Sende-Antennenanordnung 40 mit Speisenetzwerk 43 schematisch dargestellt. Die Sende-Antennenanordnung 40 ist andeutungsweise als Bird-Cage-Anordnung dargestellt. Die Sende-Antennenanordnung 40 umfasst eine Antenne 41, die an zwei Speisepunkten 42 mit Sendeleistung versorgt wird. Die Sendeleistung wird vom Speisenetzwerk 43 eingespeist. Das Speisenetzwerk 43 weist dazu zwei Leistungsausgänge 44, 45 auf, über die ein jeweils in Amplitude und Phase einstellbares Leistungssignal an die Speisepunkte 42 abgegeben wird. Die Amplituden A1, A2 des jeweiligen Leistungssignals sind durch das Speisenetzwerk 43 einstellbar, ebenso die jeweilige Phase Ph1, Ph2 bzw. die Phasendifferenz Df zwischen den beiden Leistungssignalen. Für ein kreisrundes zirkular polarisiertes Feld müsste beispielsweise A1=A2 und Df=90° gewählt werden.

## Patentansprüche

1. Ladesystem mit einem Ladegerät (1, 23) und mit einem hiermit kabellos ladbaren Hörinstrument (15),
- wobei das Ladegerät (1, 23) eine Sende-Antennenanordnung (40) und einen Sendeverstärker (12, 30) zum Ansteuern der Sende-Antennenanordnung (40) sowie einen innerhalb des Ladegerätes (1, 23) angeordneten Laderaum (5) und eine Regelungseinrichtung (13) aufweist,
- wobei das Hörinstrument (15) eine wiederaufladbare Batterie (19) und eine zum resonanten Empfangen von Leistung ausgebildete Empfangs-Antennenanordnung (21) sowie eine zum Transformieren des von der Empfangs-Antennenanordnung (21) empfangenen Signals in ein Ladesignal, zum Laden der Batterie (19) durch Zuführen des Ladesignals und zum Steuern des Ladevorgangs ausgebildete Ladeeinrichtung (20) aufweist,
**dadurch gekennzeichnet,**
- **dass** das Hörinstrument (15) eine zum Senden eines vom resonanten Empfangen von Leistung abhängigen Ladeparameterwertes an das Ladegerät (1, 23) ausgebildete Sendeeinrichtung (22) und die Ladeeinrichtung (20) eine zum Erfassen des Ladeparameterwertes ausgebildete Erfassungseinrichtung aufweist,
- **dass** der innerhalb des Ladegerätes (1, 23) angeordnete Laderaum (5) bodenseitig in Form einer Ladeschale zur Aufnahme des Hörinstrumentes (15) ausgestaltet ist,
- **dass** die Regelungseinrichtung (13) des Ladegeräts (1, 23) zum Empfangen des Ladeparameterwertes von der Sendeeinrichtung (22) ausgebildet ist und der Sendeverstärker (12, 30) die Sende-Antennenanordnung (40) in Abhängigkeit von dem Ladeparameterwert ansteuert,
- **dass** die Sende-Antennenanordnung (40) mindestens zwei Speisepunkte (42) aufweist,
- **dass** die Sende-Antennenanordnung (40) und die Speisepunkte (42) in Relation zum Laderaum (5) räumlich derart angeordnet sind, dass damit ein zirkular polarisiertes elektromagnetisches Feld im Laderaum (5) erzeugt werden kann, und
- **dass** der Sendeverstärker (12, 30) dazu ausgebildet ist, die Speisepunkte (42) entsprechend anzusteuern.

2. Ladesystem nach Anspruch 1,
**dadurch gekennzeichnet, dass** die Wandung des Laderaums (5) eine elektromagnetische Abschirmung (6, 7) umfasst.

3. Ladesystem nach Anspruch 1 oder 2,
**dadurch gekennzeichnet, dass** die Sende-Antennenanordnung (40) mehrere Antennen (8, 9, 10, 11, 26, 27, 28, 41) umfasst.

4. Ladesystem nach einem der Ansprüche 1 bis 3,
**dadurch gekennzeichnet, dass** die Antennen (8, 9, 10, 11, 26, 27, 28, 41) als Spulen ausgeführt sind.

5. Ladesystem nach einem der Ansprüche 1 bis 4,
**dadurch gekennzeichnet, dass** der Ladeparameter die aufgrund des resonanten Empfangens von Leistung erzeugte Ladespannung und/oder der Ladestrom ist.

6. Ladesystem nach einem der Ansprüche 1 bis 5,
**dadurch gekennzeichnet, dass** der Sendeverstärker (12, 30) die Sende-Antennenanordnung (40) mit einer in Abhängigkeit von dem Ladeparameterwert geregelten Frequenz ansteuert.

7. Ladesystem nach einem der Ansprüche 1 bis 6,
**dadurch gekennzeichnet, dass** der Sendeverstärker (12, 30) die Antennen (8, 9, 10, 11, 26, 27, 28, 41) individuell mit einer in Abhängigkeit von dem Ladeparameterwert geregelten Sende-Leistung ansteuert.

## Claims

1. Charging system having a charger (1, 23) and having a hearing instrument (15) wirelessly chargeable thereby,
- wherein the charger (1, 23) has a transmission antenna arrangement (40) and a transmission amplifier (12, 30) for actuating the transmission antenna arrangement (40) and also a charging space (5), arranged inside the charger (1, 23), and a regulating device (13),
- wherein the hearing instrument (15) has a rechargeable battery (19) and a reception antenna arrangement (21) designed for resonantly receiving power, and also a charging device (20) designed for transforming the signal received from the reception antenna arrangement (21) into a charging signal, for charging the battery (19) by supplying the charging signal and for controlling the charging process,
**characterized**
- **in that** the hearing instrument (15) has a transmission device (22), designed for sending a charging parameter value dependent on the resonant receiving of power to the charger (1, 23), and the charging device (20) has a capture device designed for capturing the charging parameter value,
- **in that** the charging space (5) arranged inside the charger (1, 23) has its bottom configured in the form of a charging tray for holding the hearing instrument (15),
- **in that** the regulating device (13) of the charger (1, 23) is designed for receiving the charging parameter value from the transmission device (22), and the transmission amplifier (12, 30) actuates the transmission antenna arrangement (40) on the basis of the charging parameter value,
- **in that** the transmission antenna arrangement (40) has at least two feed points (42),
- **in that** the transmission antenna arrangement (40) and the feed points (42) are in a physical arrangement in relation to the charging space (5) such that a circularly polarized electromagnetic field can be generated in the charging space (5) thereby, and
- **in that** the transmission amplifier (12, 30) is designed to actuate the feed points (42) accordingly.

2. Charging system according to Claim 1, **characterized in that** the wall of the charging space (5) comprises an electromagnetic screen (6, 7) .

3. Charging system according to Claim 1 or 2, **characterized in that** the transmission antenna arrangement (40) comprises multiple antennas (8, 9, 10, 11, 26, 27, 28, 41) .

4. Charging system according to one of Claims 1 to 3, **characterized in that** the antennas (8, 9, 10, 11, 26, 27, 28, 41) are embodied as coils.

5. Charging system according to one of Claims 1 to 4, **characterized in that** the charging parameter is the charging voltage and/or the charging current produced on the basis of the resonant receiving of power.

6. Charging system according to one of Claims 1 to 5, **characterized in that** the transmission amplifier (12, 30) actuates the transmission antenna arrangement (40) at a frequency regulated on the basis of the charging parameter value.

7. Charging system according to one of Claims 1 to 6, **characterized in that** the transmission amplifier (12, 30) actuates the antennas (8, 9, 10, 11, 26, 27, 28, 41) individually at a transmission power regulated on the basis of the charging parameter value.

## Revendications

1. Système de charge comprenant un chargeur (1, 23) et comprenant un instrument auditif (15) pouvant être chargé sans fil par celui-ci,
- le chargeur (1, 23) possédant un arrangement d'antenne d'émission (40) et un amplificateur d'émission (12, 30) destiné à exciter l'arrangement d'antenne d'émission (40) ainsi qu'un espace de charge (5) disposé à l'intérieur du chargeur (1, 23) et un dispositif de régulation (13),
- l'instrument auditif (15) possédant une batterie rechargeable (19) et un arrangement d'antenne de réception (21) configuré pour la réception d'énergie par résonance ainsi qu'un dispositif de charge (20) configuré pour transformer le signal reçu par l'arrangement d'antenne de réception (21) en un signal de charge, pour charger la batterie (19) en acheminant le signal de charge et pour commander l'opération de charge,
**caractérisé en ce**
- **que** l'instrument auditif (15) possède un dispositif d'émission (22) configuré pour envoyer au chargeur (1, 23) une valeur de paramètre de charge dépendante de la réception d'énergie par résonance et le dispositif de charge (20) possède un dispositif d'acquisition configuré pour acquérir la d'énergie,
- **que** l'espace de charge (5) disposé à l'intérieur du chargeur (1, 23) est configuré du côté du fond sous la forme d'une coque de charge destinée à accueillir l'instrument auditif (15),
- **que** le dispositif de régulation (13) du chargeur (1, 23) est configuré pour recevoir la valeur de paramètre de charge de la part du dispositif d'émission (22) et l'amplificateur d'émission (12, 30) commande l'arrangement d'antenne d'émission (40) en fonction de la valeur de paramètre de charge,
- **que** l'arrangement d'antenne d'émission (40) possède au moins deux points d'alimentation (42),
- **que** l'arrangement d'antenne d'émission (40) et les points d'alimentation (42) sont disposés par rapport à l'espace de charge (5) de telle sorte qu'il est possible avec celui-ci de générer dans l'espace de charge (5) un champ électromagnétique à polarisation circulaire, et
- **que** l'amplificateur d'émission (12, 30) est configuré pour exciter les points d'alimentation (42) en conséquence.

2. Système de charge selon la revendication 1, **caractérisé en ce que** la paroi de l'espace de charge (5) comporte un blindage électromagnétique (6, 7).

3. Système de charge selon la revendication 1 ou 2, **caractérisé en ce que** l'arrangement d'antenne d'émission (40) comporte plusieurs antennes (8, 9, 10, 11, 26, 27, 28, 41).

4. Système de charge selon l'une des revendications 1 à 3, **caractérisé en ce que** les antennes (8, 9, 10, 11, 26, 27, 28, 41) sont réalisées sous la forme de bobines.

5. Système de charge selon l'une des revendications 1 à 4, **caractérisé en ce que** le paramètre de charge est la tension de charge et/ou le courant de charge généré du fait de la réception d'énergie par résonance.

6. Système de charge selon l'une des revendications 1 à 5, **caractérisé en ce que** l'amplificateur d'émission (12, 30) excite l'arrangement d'antenne d'émission (40) avec une fréquence régulée en fonction de la valeur de paramètre de charge.

7. Système de charge selon l'une des revendications 1 à 6, **caractérisé en ce que** l'amplificateur d'émission (12, 30) excite les antennes (8, 9, 10, 11, 26, 27, 28, 41) individuellement avec une puissance d'émission régulée en fonction de la valeur de paramètre de charge.
